(19)

Europäisches
Patentamt
European
Patent Office
Office européen
des brevets

(11)　**EP 4 468 672 A1**

(12)　**EUROPEAN PATENT APPLICATION**
published in accordance with Art. 153(4) EPC

(43) Date of publication:
　　**27.11.2024　Bulletin 2024/48**

(21) Application number: **22930326.8**

(22) Date of filing: **11.03.2022**

(51) International Patent Classification (IPC):
　　**H04L 45/24** (2022.01)　　　**H04L 47/56** (2022.01)

(52) Cooperative Patent Classification (CPC):
　　**H04L 45/24; H04L 47/56**

(86) International application number:
　　**PCT/CN2022/080324**

(87) International publication number:
　　**WO 2023/168688 (14.09.2023 Gazette 2023/37)**

(84) Designated Contracting States:
　　**AL AT BE BG CH CY CZ DE DK EE ES FI FR GB**
　　**GR HR HU IE IS IT LI LT LU LV MC MK MT NL NO**
　　**PL PT RO RS SE SI SK SM TR**
　　Designated Extension States:
　　**BA ME**
　　Designated Validation States:
　　**KH MA MD TN**

(71) Applicant: **Huawei Technologies Co., Ltd.**
　　**Shenzhen, Guangdong 518129 (CN)**

(72) Inventors:
　　• **GUO, Xiaodong**
　　　**Shenzhen, Guangdong 518129 (CN)**
　　• **WU, Weimin**
　　　**Wuhan, Hubei 430074 (CN)**

• **ZHANG, Haibo**
　**Shenzhen, Guangdong 518129 (CN)**
• **XU, Cong**
　**Shenzhen, Guangdong 518129 (CN)**
• **WANG, Yiming**
　**Shenzhen, Guangdong 518129 (CN)**
• **XIAO, Yuren**
　**Shenzhen, Guangdong 518129 (CN)**
• **GUO, Yongkang**
　**Shenzhen, Guangdong 518129 (CN)**
• **DU, Zihao**
　**Wuhan, Hubei 430074 (CN)**

(74) Representative: **MERH-IP Matias Erny Reichl**
　　**Hoffmann**
　　**Patentanwälte PartG mbB**
　　**Paul-Heyse-Strasse 29**
　　**80336 München (DE)**

(54)　**DATA SENDING METHOD AND RELATED DEVICE**

(57)　Embodiments of this application provide a data sending method and a related device. The method includes: A first computer device predicts link quality of N links based on a sending queue length of each of the N links and historical statistical information; and selects, based on the predicted link quality, a first target link for sending first data, to send the first data to a second computer device, where the first data is a part of data in a target data stream. In the foregoing technical solutions, a plurality of links can be better used, and a link with better link quality can be selected to send data. Therefore, the foregoing technical solutions can improve data transmission efficiency.

```
┌─────────────────────────────────────────┐
│ A first computer device determines a     │ 501
│ sending queue length of each of N links  │
└─────────────────────────────────────────┘
                    │
┌─────────────────────────────────────────┐
│ The first computer device determines N   │ 502
│ first predicted values based on          │
│ historical statistical information and    │
│ the sending queue length of each of the  │
│ N links                                   │
└─────────────────────────────────────────┘
                    │
┌─────────────────────────────────────────┐
│ The first computer device determines a   │ 503
│ first target link from the N links based │
│ on the N first predicted values          │
└─────────────────────────────────────────┘
                    │
┌─────────────────────────────────────────┐
│ The first computer device sends first    │ 504
│ data to a second computer device over    │
│ the first target link                    │
└─────────────────────────────────────────┘
```

FIG. 5

EP 4 468 672 A1

## Description

## TECHNICAL FIELD

Embodiments of this application relate to the field of communication technologies, and more specifically, to a data sending method and a related device.

## BACKGROUND

With evolution of technologies, devices can communicate with each other not only over a single link, but also over a plurality of links. A wireless local area network (wireless local area network, WLAN) is used as an example. If both a router and a terminal device (for example, a mobile phone, a tablet computer, or a laptop computer) support 2.4 G and 5 G frequency bands, the router and the terminal device may directly use the 2.4 G frequency band and the 5 G frequency band to perform multi-link communication.

However, advantages of a plurality of links are not fully utilized in current multi-link communication. The foregoing WLAN scenario is still used as an example. In a multi-link communication solution, data of different data streams is sent over 2.4 G and 5 G links. For example, it is assumed that there are three data streams in a network: data stream 1, data stream 2, and data stream 3. A data stream is bound to a link. For example, the data stream 1 is bound to the 2.4 G frequency band, and the data stream 2 and the data stream 3 are bound to the 5 G frequency band. In this way, when receiving a data packet of the data stream 1 from the network, the router sends the data packet of the data stream 1 to the terminal device by using the 2.4 G frequency band. When receiving a data packet of the data stream 2 or the data stream 3 from the network, the router sends the received data packet of the data stream 2 or the data stream 3 to the terminal device by using the 5 G frequency band.

In another multi-link communication solution, same data is sent over 2.4 G and 5 G links. One (for example, the 5 G frequency band) of the two links may be used as a primary link, and the other link (for example, the 2.4 G frequency band) may be used as a secondary link. A receiving end (for example, the terminal device) receives, from the primary link, data sent by a transmitting end (for example, the router). If the receiving end detects packet loss, the receiving end directly obtains packet loss data from the secondary link.

It can be learned that current multi-link communication solutions are essentially single-link communication solutions. The first solution is used as an example. It is assumed that in a time period, the router receives only the data packet of the data stream 1, or the data stream 2 and the data stream 3 have been terminated. In this case, the router sends the received data packet to the terminal device over only a single link (namely, the 2.4 G frequency band). The second multi-link communication solution is essentially more like a single-link communication method with high stability. Therefore, a method that can better utilize multi-link communication is required.

## SUMMARY

Embodiments of this application provide a data sending method and a related device, to better utilize multi-link communication and improve data transmission efficiency.

According to a first aspect, an embodiment of this application provides a data sending method, including: A first computer device determines a sending queue length of each of N links, where N is a positive integer greater than or equal to 2; the first computer device determines N first predicted values based on historical statistical information and the sending queue length of each of the N links, where the historical statistical information is determined by the first computer device based on data sent to a second computer device over the N links, and the N first predicted values are respectively used to predict link quality of the N links; the first computer device determines a first target link from the N links based on the N first predicted values; and the first computer device sends first data to the second computer device over the first target link, where the first data is a part of data in a target data stream.

In the foregoing technical solution, a plurality of links can be better used, and a link with better link quality can be selected to send data. Therefore, the foregoing technical solution can improve data transmission efficiency.

Optionally, the first data is one or more data packets (or frames) in a data stream. In this way, the first computer device may select, at a granularity of a data packet (or a frame), a link over which data needs to be sent, and does not need to select, at a larger granularity (for example, of a data stream), a link over which data needs to be sent. In this case, when scheduling data, the first computer device does not need to determine a stream to which the data belongs. Therefore, the foregoing technical solution is easier to implement.

With reference to the first aspect, in a possible design of the first aspect, the historical statistical information includes at least one of the following information: a mapping relationship between a sending queue length and link quality, or a throughput at which the first computer device sends data over the N links.

With reference to the first aspect, in a possible design of the first aspect, that the first computer device determines a first target link from the N links based on the N first predicted values includes: The first computer device determines, based on the N first predicted values, a link with best link quality in the N links as the first target link.

With reference to the first aspect, in a possible design of the first aspect, when the first computer device is a relay node, before the first computer device determines the sending queue length of each of the N links, the method further includes: The first computer device receives the first data from a third computer device. That the first computer device determines a first target link from the N links based on the N first predicted values includes: The first computer device determines whether unreceived second data exists, where the second data is data that is sent by the third computer device to the first computer device and whose sending time is earlier than that of the first data; and when the unreceived second data does not exist, the first computer device determines, based on the N first predicted values, a link with best link quality in the N links as the first target link; or when the unreceived second data exists, the first computer device determines, based on the N first predicted values, a link other than a link with best link quality in the N links as the first target link.

In the foregoing technical solution, a link with poor link quality may be selected for sending out-of-order data. In this way, the out-of-order data may arrive at the second computer device later. The data received by the second computer device may be sequential. In this way, a probability of sorting data by the second computer device can be reduced.

With reference to the first aspect, in a possible design of the first aspect, when the unreceived second data exists, the method further includes: The first computer device determines a second reference sending queue length of an $n^{th}$ link in the N links based on a reference length and a first reference sending queue length of the $n^{th}$ link, where the first reference sending queue length of the $n^{th}$ link is a sending queue length of the $n^{th}$ link that is used when the first computer device sends third data, the third data is data that is sent by the third computer device to the first computer device and whose sending time is earlier than that of the second data, and n=1, ..., or N; determines N second predicted values based on the historical statistical information and a second reference sending queue length of each of the N links, where the N second predicted values are respectively used to predict reference link quality of the N links; determines a second target link based on the N second predicted values, where the second target link is a link with best reference link quality in the N links; and when the second data from the third computer device is received, forwards the second data to the second computer device over the second target link.

In the foregoing technical solution, the second data may be pre-scheduled when the second data is not received. In this way, after receiving the second data, the first computer device may directly send the second data based on a pre-scheduling result. In this way, processing time of the second data can be reduced, and a forwarding speed of the second data can be further improved.

With reference to the first aspect, in a possible design of the first aspect, when the historical statistical information includes the throughput at which the first computer device sends data over the N links, before the first computer device determines the N first predicted values based on the historical statistical information and the sending queue length of each of the N links, the method further includes: The first computer device determines M reference throughputs of the $n^{th}$ link in the N links, where an $m^{th}$ reference throughput in the M reference throughputs is determined by the first computer device based on data successfully sent to the second computer device over the $n^{th}$ link in an $m^{th}$ periodicity in M periodicities, M is a positive integer greater than or equal to 2, m=1, ..., or M, and n=1, ..., or N; and the first computer device determines, based on one or more largest reference throughputs in the M reference throughputs, a throughput of sending data over the $n^{th}$ link.

With reference to the first aspect, in a possible design of the first aspect, when the historical statistical information includes the mapping relationship between a sending queue length and link quality, before the first computer device determines the N first predicted values based on the historical statistical information and the sending queue length of each of the N links, the method further includes: The first computer device sends a plurality of pieces of data to the second computer device over the $n^{th}$ link in the N links, where n=1, ..., or N; the first computer device receives feedback information from the second computer device, where the feedback information includes link quality of the plurality of pieces of data; and the first computer device determines a mapping relationship between a sending queue length and link quality of the $n^{th}$ link based on a plurality of sending queue lengths and the link quality of the plurality of pieces of data, where the plurality of sending queue lengths are respectively sending queue lengths used when the first computer device sends the plurality of pieces of data to the second computer device.

With reference to the first aspect, in a possible design of the first aspect, each of the plurality of pieces of data includes first identity information, second identity information, and sending time information, the first identity information indicates an identity of the $n^{th}$ link, the second identity information indicates an identity of each piece of data, and the sending time information indicates sending time of each piece of data. The feedback information includes first delay information, a plurality of pieces of second delay information, and the first identity information, the first delay information indicates a minimum transmission delay of the $n^{th}$ link, the plurality of pieces of second delay information are in a one-to-one correspondence with the plurality of pieces of data, and each of the plurality of pieces of second delay information indicates a difference between a transmission delay of corresponding data and the minimum transmission delay.

Optionally, the time information may include only a low-order timestamp of sending time, for example, may include only a timestamp of low-order 10 bits. In this way, a quantity of bits occupied by the sending time can be reduced.

With reference to the first aspect, in a possible design of the first aspect, the N links include at least two of the following links: a 2.4 GHz frequency band wireless link, a 5 GHz frequency band wireless link, a 5 GHz low-frequency wireless link, a 5 GHz high-frequency wireless link, a wired link, an optical fiber, and a power line communication link. According to a second aspect, an embodiment of this application provides a computer device. The computer device includes units configured to implement any one of the first aspect or the possible implementations of the first aspect.

According to a second aspect, an embodiment of this application provides a computer device. The computer device includes units configured to implement any one of the first aspect or the possible implementations of the first aspect.

According to a third aspect, an embodiment of this application provides a computer device. The computer device includes a processor. The processor is configured to: be coupled to a memory, and read and execute instructions and/or program code in the memory, to perform the method according to any one of the first aspect or the possible implementations of the first aspect.

According to a fourth aspect, an embodiment of this application provides a chip system. The chip system includes a logic circuit. The logic circuit is configured to: be coupled to an input/output interface, and transmit data through the input/output interface, to perform any one of the first aspect or the possible implementations of the first aspect.

According to a fifth aspect, an embodiment of this application provides a computer-readable storage medium. The computer-readable storage medium stores program code, and when the computer storage medium is run on a computer, the computer is enabled to perform any one of the first aspect or the possible implementations of the first aspect.

According to a sixth aspect, an embodiment of this application provides a computer program product. The computer program product includes computer program code, and when the computer program code is run on a computer, the computer is enabled to perform any one of the first aspect or the possible implementations of the first aspect.

## BRIEF DESCRIPTION OF DRAWINGS

FIG. 1 is a schematic diagram of an application scenario according to an embodiment of this application;
FIG. 2 is a schematic diagram of an application scenario according to an embodiment of this application;
FIG. 3 is a schematic diagram of another application scenario according to an embodiment of this application;

FIG. 4 is a schematic diagram of another application scenario according to an embodiment of this application;
FIG. 5 shows a data sending method according to an embodiment of this application;
FIG. 6 is a schematic diagram of data sent by a first computer device to a second computer device;
FIG. 7 is a schematic diagram of a feedback packet sent by a second computer device to a first computer device;
FIG. 8 is a schematic diagram of determining a throughput of sending data over N links;
FIG. 9 is a schematic diagram of a computer system including a relay node; and
FIG. 10 is a schematic block diagram of a structure of a computer device according to an embodiment of this application.

## DESCRIPTION OF EMBODIMENTS

The following describes technical solutions in embodiments of this application with reference to accompanying drawings.

A computer device in embodiments of this application is a computer device that supports multi-link communication. Multi-link means two or more than two links. Links in technical solutions in embodiments of this application include but are not limited to the following links: 2.4 gigahertz (gigahertz, GHz) frequency band wireless link, 5 GHz frequency band wireless link, 5 GHz low-frequency wireless link, 5 GHz high-frequency wireless link, a wired link, an optical fiber, a power line communication (power line communication, PLC) link, and the like. The computer device may be a terminal device or a network device. The terminal device may include a notebook computer, a desktop computer, a mobile phone, a tablet computer, a television box, a television, a network storage device, a station (station, STA), and the like. The network device may be a router, an access point (access point, AP), an access controller, or the like.

A person skilled in the art may understand that a 2.4 GHz frequency band may be referred to as 2.4 G for short. Similarly, a 5 GHz frequency band may be referred to as 5 G for short, 5 GHz low frequency may be referred to as 5 G low frequency for short, and 5 GHz high frequency may be referred to as 5 G high frequency for short.

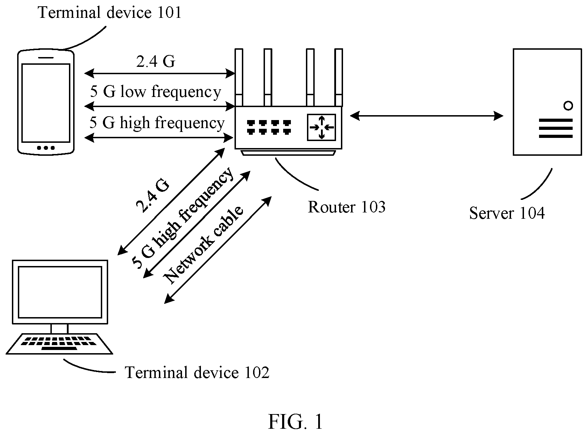

FIG. 1 is a schematic diagram of an application scenario according to an embodiment of this application. A system shown in FIG. 1 includes two terminal devices: a terminal device 101 and a terminal device 102. The system shown in FIG. 1 further includes a network device (namely, a router 103) and a server 104.

The router 103 receives data from the server 104, and sends the data to the terminal device 101 and the terminal device 103.

As shown in FIG. 1, the terminal device 101 and the router 103 may communicate with each other over three links. The three links are respectively a 2.4 G wireless link, a 5 G low-frequency wireless link, and a 5 G high-frequency wireless link. The router 103 may send data to the terminal device 101 over the three links, or may receive data from the terminal device 101 over the three links.

The terminal device 102 and the router 103 may communicate with each other over three links. The three links are respectively a 2.4 G wireless link, a 5 G high-frequency wireless link, and a wired link. The router 103 may send data to the terminal device 102 over the three links, or may receive data from the terminal device 102 over the three links.

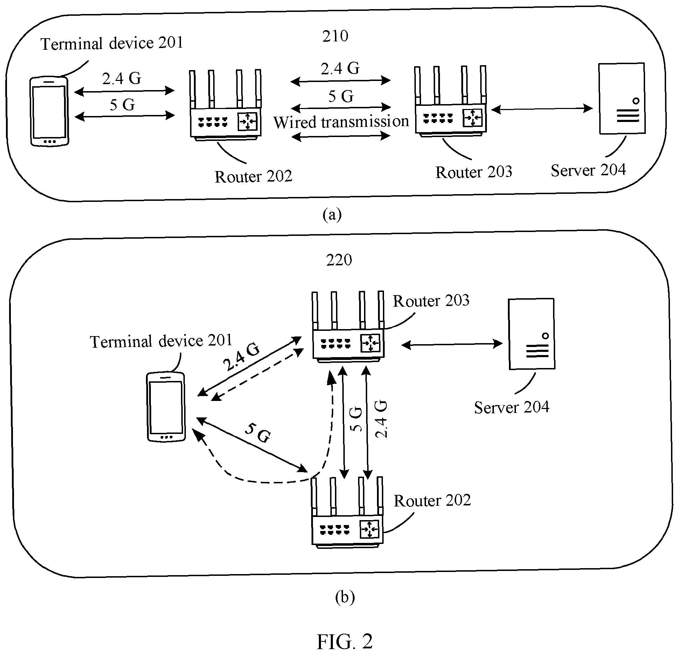

FIG. 2 is a schematic diagram of an application scenario according to an embodiment of this application. FIG. 2 shows two application scenarios in which a plurality of routers are included. In the scenarios shown in (a) and (b) in FIG. 2, a router (a router 203) communicating with a server may be referred to as a primary route, and a router (a router 202) connected to the primary route may be referred to as a secondary route. It may be understood that, for ease of description, FIG. 2 shows only one secondary route. In some embodiments, a multi-router scenario may alternatively include two or more secondary routes.

A system 210 shown in (a) in FIG. 2 includes a terminal device 201, the router 202, the router 203, and a server 204. The router 203 may receive data from the server 204, and send the received data to the router 202 over a plurality of links. The router 202 may send the data from the router 203 to the terminal device 201 over a plurality of links.

As shown in (a) in FIG. 2, the router 203 may send data to the router 202 over a 2.4 G wireless link, a 5 G wireless link, and a wired link. Correspondingly, the router 202 may also send data to the router 203 over the 2.4 G wireless link, the 5 G wireless link, and the wired link. The router 202 may send data to the terminal device 201 over a 2.4 G wireless link and a 5 G wireless link. Correspondingly, the terminal device 201 may also send data to the router 202 over the 2.4 G wireless link and the 5 G wireless link.

A system 220 shown in (b) in FIG. 2 includes a terminal device 201, a router 202, a router 203, and a server 204. The router 203 may receive data from the server 204, and send the received data to the router 202 over a 2.4 G wireless link and a 5 G wireless link. Correspondingly, the router 202 may also send the received data to the router 203 over the 2.4 G wireless link and the 5 G wireless link.

Different from that in the system 210, in the system 220, the terminal device 201 communicates with the router 203 over the 2.4 G wireless link, and communicates with the router 202 over the 5 G wireless link. The router 203 may directly send data to the terminal device 201 over the 2.4 G wireless link. Correspondingly, the terminal device 201 may also directly send data to the router 203 over the 2.4 G wireless link. Alternatively, the router 203 may send data to the terminal device 201 over the 5 G wireless link. However, the router 203 needs to send the data to the router 202 over the 5 G wireless link, and then the router 202 sends the data to the terminal device 201 over the 5 G wireless link. Correspondingly, the terminal device 201 may also send data to the router 203 over the 5 G wireless link. However, the data sent by the terminal device 201 to the router 203 over the 5 G wireless link also needs to be forwarded by the router 202.

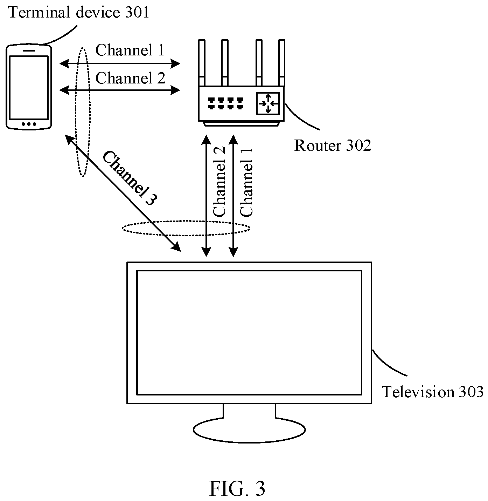

FIG. 3 is a schematic diagram of another application scenario according to an embodiment of this application. As shown in FIG. 3, a terminal device 301 may project a screen to a television 303 through a channel 1, a channel 2, and a channel 3. The channel 1 and the channel 2 may be two different wireless links. For example, the channel 1 may be a 2.4 G wireless link, and the channel 2 may be a 5 G wireless link. For another example, the channel 1 is a 5 G low-frequency wireless link, and the channel 2 is a 5 G high-frequency wireless link. The channel 3 is a WLAN direct communication link. The terminal device 301 may project a screen to the television 303 over three communication links (namely, the channel 1, the channel 2, and the channel 3). As described above, the channel 3 is a WLAN direct communication link. Therefore, the terminal device 301 may directly send data to the television 303 through the channel 3. Data that is sent by the terminal device 301 to the television 303 through the channel 1 and the channel 2 may be forwarded by the router 302.

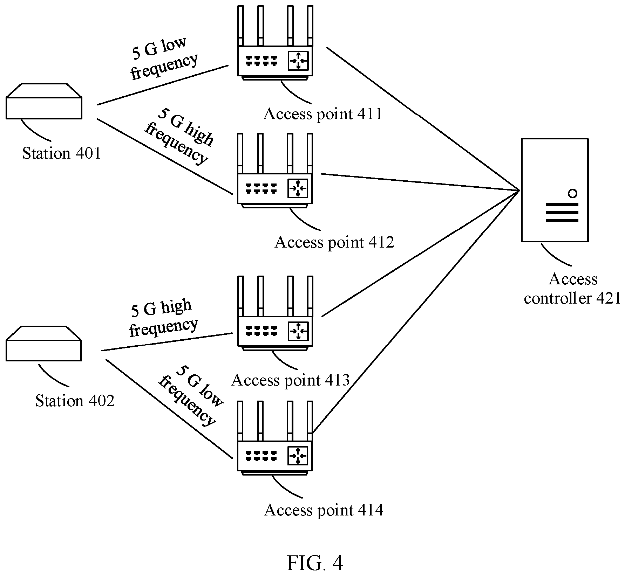

FIG. 4 is a schematic diagram of another application scenario according to an embodiment of this application. As shown in FIG. 4, an access point 411, an access point 412, an access point 413, and an access point 414 each may receive data from an access controller (access controller, AC) 421.

If the access controller 421 needs to send data to a station 401 over a 5 G low-frequency wireless link, the access controller may send the data to the access point 411. The access point 411 may send the received data to the station 401 over the 5 G low-frequency wireless link. If the access controller 421 needs to send data to the station 401 over a 5 G high-frequency wireless link, the access controller may send the data to the access point 412. The access point 412 may send the received data to the station 401 over the 5 G high-frequency wireless link.

Similarly, if the access controller 421 needs to send data to a station 402 over a 5 G high-frequency wireless link, the access controller may send the data to the access point 413. The access point 413 may send the received data to the station 402 over the 5 G high-frequency wireless link. If the access controller 421 needs to send data to a station 402 over a 5 G low-frequency wireless link, the access controller may send the data to the access point 414. The access point 414 may send the received data to the station 402 over the 5 G low-frequency wireless link.

In other words, the station 401 may separately receive, over two links, data sent by different access points, and the station 402 may separately receive, over two links, data sent by different access points. Correspondingly, the station 401 may also send data to the access point 411 over the 5 G low-frequency wireless link, and send data to the access point 412 over the 5 G high-frequency wireless link. Similarly, the station 402 may also send data to the access point 413 over the 5 G high-frequency wireless link, and send data to the access point 414 over the 5 G low-frequency wireless link.

The computer device that supports multi-link communication in embodiments of this application may be a computer device (for example, the terminal device, the router, and the television in FIG. 1 to FIG. 3) that can directly communicate with another computer device over a plurality of links shown in FIG. 1 to FIG. 3, or may be a computer device, like the access controller 421 shown in FIG. 4, that may use an access point communicating with a station over different links.

A person skilled in the art may understand that link types shown in FIG. 1 to FIG. 4 are merely intended to help a person skilled in the art better understand the technical solutions of this application, but are not intended to limit the technical solutions of this application.

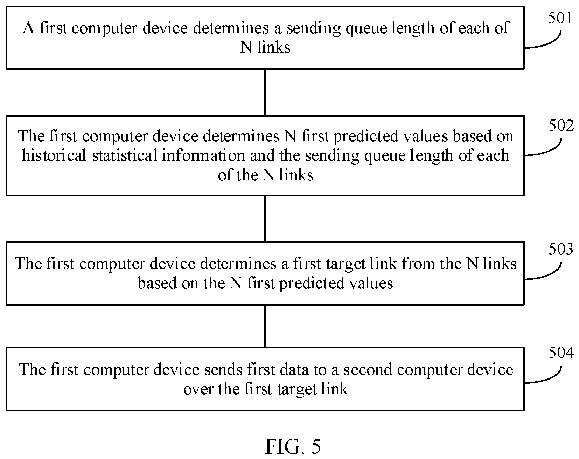

FIG. 5 shows a data sending method according to an embodiment of this application.

501: A first computer device determines a sending queue length of each of N links, where N is a positive integer greater than or equal to 2.

The sending queue length of each link includes a length of to-be-sent first data.

502: The first computer device determines N first predicted values based on historical statistical information and the sending queue length of each of the N links.

The historical statistical information is determined by the first computer device based on data sent to a second computer device over the N links. The N first predicted values are respectively used to predict link quality of the N links.

503: The first computer device determines a first target link from the N links based on the N first predicted values.

504: The first computer device sends the first data to the second computer device over the first target link, where the first data is a part of data in a target data stream.

Data (for example, the first data, second data, or third data) in this embodiment of this application may be a data packet (packet) or a frame (frame), or may be a plurality of data packets or a plurality of frames. For example, the first data may include 5, 10, or more data packets (or frames). The plurality of data packets (or the plurality of frames) may be referred to as a group of data packets (a group of frames).

In the technical solution shown in FIG. 5, when sending data to the second computer device, the first computer device first predicts link quality of each link, and then selects an appropriate link based on the link quality to send the data to the second computer device. In other words, in the multi-link communication solution shown in FIG. 5, the first computer device flexibly selects an appropriate link to send data to the second computer device. In this way, the first computer device may fully use a plurality of links to communicate with the second computer device. In addition, the first data is one or more data packets (or frames) in a data stream. In this way, the first computer device may select, at a granularity of a data packet (or a frame), a link over which data needs to be sent, and does not need to select, at a larger granularity (for example, of a data stream), a link over which data needs to be sent. In this case, when scheduling data, the first computer device does not need to determine a stream to which the data belongs. Therefore, the foregoing technical solution is easier to implement.

The first computer device and the second computer device in FIG. 5 may be any two computer devices that can communicate over a plurality of links shown in FIG. 1 to FIG. 4. For example, in some embodiments, the first computer device may be the router 103 shown in FIG. 1, and the second computer device may be the terminal device 101 or the terminal device 102. For another example, in some embodiments, the first computer device may be the terminal device 101 or the terminal device 102 shown in FIG. 1, and the second computer device may be the router 103. For another example, in some embodiments, the first computer device may be the router 203 in (a) in FIG. 2, and the second computer device may be the router 202 in (a) in FIG. 2. For another example, in some embodiments, the first computer device may be the router 202 in (a) in FIG. 2, and the second computer device may be the terminal device 201 in (a) in FIG. 2. For another example, in some embodiments, the first computer device may be the router 203 in (b) in FIG. 2, and the second computer device may be the terminal device 201 in (b) in FIG. 2. For another example, in some embodiments, the first computer device may be the terminal device 301 in FIG. 3, and the second computer device may be the router 302. For another example, in some embodiments, the first computer device may be the router 302 in FIG. 3, and the second computer device may be the television 303. For another example, in some embodiments, the first computer device may be the access controller 421 in FIG. 4, and the second computer device may be the station 401 or the station 402.

In some embodiments, the historical statistical information may include at least one of the following information: a mapping relationship between a sending queue length and link quality, or a throughput at which the first computer device sends data over the N links. In other words, in some embodiments, the historical statistical information is the mapping relationship between a sending queue length and link quality. In some other embodiments, the historical statistical information is the throughput at which the first computer device sends data over the N links. In some other embodiments, the historical statistical information includes the mapping relationship between a sending queue length and link quality and the throughput at which the first computer device sends data over the N links.

In some embodiments, link quality may be measured by using any one or a combination of indicators including a delay, a jitter, a packet loss rate, and the like.

If the link quality is measured by only one indicator, a better value indicated by the indicator indicates better link quality. For example, if the link quality is a delay, a smaller delay indicates better link quality; or if the link quality is a packet loss rate, a smaller packet loss rate indicates better link quality.

If the link quality is determined based on two or more indicators, normalization processing may be performed on each indicator first, and then final link quality is determined based on a normalization result. For example, normalization results may be summed up to obtain the link quality.

In some embodiments, if the link quality is determined based on two or more indicators, weight values of different indicators may be the same.

In some other embodiments, if the link quality is determined based on two or more indicators, weight values of different indicators may be different. In some embodiments, the first computer device may determine a weight value of each indicator based on the first data or a requirement of the target data stream that includes the first data. For example, if the first data or the target data stream is delay-sensitive, the first computer device may increase a weight value of the delay and decrease a weight value of another indicator. For another example, if the first data or the target data stream is data that requires high reliability, the first computer device may increase a weight value of the packet loss rate and decrease a weight value of another indicator.

For ease of description, it is assumed that the link quality includes only the delay in the following embodiments. Assuming that N is equal to 2, the two links may be referred to as a first link and a second link respectively.

As described above, in some embodiments, the historical statistical information may include the mapping relationship between a sending queue length and link quality. In some embodiments, the N links may have N mapping tables, the N mapping tables are in a one-to-one correspondence with the N links, and each mapping table is used to record a mapping relationship between a sending queue length and link quality of a corresponding link. N pieces of link quality determined by the first computer device based on the mapping relationship between a queue length and link quality are the N first predicted values.

For example, Table 1 and Table 2 are respectively a first mapping table corresponding to the first link and a second mapping table corresponding to the second link.

**Table 1**

| Queue length | Delay |
|---|---|
| $LEN_1$ | $DLY_{1\_1}$ |
| $LEN_2$ | $DLY_{1\_2}$ |
| $LEN_3$ | $DLY_{1\_3}$ |
| ... | ... |

**Table 2**

| Queue length | Delay |
|---|---|
| $LEN_0$ | $DLY_{2\_1}$ |
| $LEN_2$ | $DLY_{2\_2}$ |
| $LEN_3$ | $DLY_{2\_3}$ |
| ... | ... |

Before sending the first data, the first computer device may first determine a length of a to-be-sent queue. It is assumed that the length of the to-be-sent queue determined by the first computer device is $LEN_2$. In this case, the first computer device may determine the delay $DLY_{1\_2}$ from Table 1, and determine the delay $DLY_{2\_2}$ from Table 2. The delay $DLY_{1\_2}$ and the delay $DLY_{2\_2}$ are two first predicted values determined by the first computer device. After determining the two delays, the first computer device may compare the two delays, and select a link with a smaller delay as the first target link. For example, if $DLY_{2\_2}$ is less than $DLY_{1\_2}$, the first computer device may select the second link as the first target link, and send the first data over the second link.

In some embodiments, in the mapping relationship between a queue length and link quality, there may not be a queue length that is exactly the same as the length of the to-be-sent queue. In this case, the first computer device may determine, as the first predicted value, link quality that corresponds to a queue length closest to the length of the to-be-sent queue in the mapping relationship between a queue length and link quality.

Table 1 and Table 2 are still used as examples. It is assumed that the length of the to-be-sent queue determined by the first computer device is $LEN_k$, and Table 1 and Table 2 do not have a queue length that is the same as $LEN_k$. In this case, the first computer device may determine a queue length having a smallest difference from $LEN_k$ in each table. For example, assuming that a difference between $LEN_2$ and $LEN_k$ is the smallest, the first computer device may determine that the delay $DLY_{1\_3}$ and the delay $DLY_{2\_3}$ are two first predicted values, compare the two delays, and select a link with a smaller delay as the first target link.

In some embodiments, some mapping tables may include a queue length that is exactly the same as the length of the to-be-sent queue, and some other mapping tables may not include a queue length that is exactly the same as the length of the to-be-sent queue. In this case, for the some mapping tables (namely, mapping tables including a queue length that is exactly the same as the length of the to-be-sent queue), a delay of the queue length that is exactly the same as the length of the to-be-sent queue in the mapping tables may be directly determined as the first predicted value; and for the some other mapping tables (namely, mapping tables not including a queue length that is exactly the same as the length of the to-be-sent queue), a delay of a queue length that is closest to the length of the to-be-sent queue in the mapping tables may be determined as the first predicted value.

Table 1 and Table 2 are still used as examples. Assuming that the length of the to-be-sent queue determined by the first computer device is $LEN_1$, the first computer device may determine the delay $DLY_{1\_1}$ from Table 1. Assuming that Table 2 does not include the queue length $LEN_1$, the first computer device may determine, from the queue lengths included in Table 2, a queue length that is closest to the queue length $LEN_1$. Assuming that a queue length that is closest to the queue length $LEN_1$ in Table 2 is $LEN_0$, the first computer device may determine that the first predicted value of the second link is $DLY_{2\_1}$. In this case, the first computer device may compare $DLY_{1\_1}$ and $DLY_{2\_1}$, and select a link with a smaller delay as the first target link for sending the first data.

In some other embodiments, if there is no queue length that is the same as the length of the to-be-sent queue in the mapping table, a queue length (referred to as a reference queue length below) whose difference from the length of the to-be-sent queue is less than a preset threshold may be determined. If there is only one reference queue length, it may be determined that a delay corresponding to the reference queue length is the first predicted value of the link. If there are a plurality of reference queue lengths, it may be determined that an average value of delays of the plurality of reference queue lengths is the first predicted value of the link.

In the foregoing embodiments, different links use different mapping tables to record relationships between queue lengths and delays. In some other embodiments, one table may alternatively be used to record relationships between different queue lengths and delays of different links. For example, Table 3 records mapping relationships between queue lengths and delays of the first link and the second link.

**Table 3**

| Link | Queue length | Delay |
|---|---|---|
| 1 | $LEN_1$ | $DLY_{1\_1}$ |
| 1 | $LEN_2$ | $DLY_{1\_2}$ |
| 1 | $LEN_3$ | $DLY_{1\_3}$ |
| 2 | $LEN_0$ | $DLY_{2\_1}$ |
| 2 | $LEN_2$ | $DLY_{2\_2}$ |

(continued)

| Link | Queue length | Delay |
|---|---|---|
| 2 | $LEN_3$ | $DLY_{2\_3}$ |
| ... | ... | ... |

A person skilled in the art may understand that using a table to record a mapping relationship between a queue length and link quality is only a conventional implementation in this field. A person skilled in the art may alternatively record the mapping relationship between a queue length and link quality in another manner, for example, may record the mapping relationship between a queue length and link quality in a key-value pair manner or the like.

The following describes how to obtain the entries in Table 1, Table 2, and Table 3.

Data sent by the first computer device to the second computer device carries time (referred to as sending time below) for sending the data. In addition, the first computer device further needs to record a current congestion length when sending the data to the second computer device. In some embodiments, after receiving the data, the second computer device may determine delay information based on time (referred to as receiving time below) at which the data is received and the sending time carried in the data, and feed back the determined delay information to the first computer device. The first computer device may determine a delay based on the delay information fed back by the second computer device, and record, into a mapping table, the delay and the congestion length that is recorded when the data is sent.

In some embodiments, the data sent by the first computer device to the second computer device further needs to carry identity information (referred to as first identity information below) indicating a link identity and identity information (referred to as second identity information below) indicating a data identity. The link identity may be a 2.4 G wireless link, a 5 G wireless link, a 5 G high-frequency wireless link, a 5 G low-frequency wireless link, an optical fiber, an LPC, or the like.

In some embodiments, after receiving a plurality of pieces of data sent by the first computer device, the second computer device may feed back delay information of the plurality of pieces of data to the first computer device by using one piece of feedback information. In some embodiments, the feedback information may include the first identity information, first delay information, and a plurality of pieces of second delay information. The first identity information indicates an identity of an $n^{th}$ link. The first delay information indicates a minimum delay of the $n^{th}$ link, the plurality of pieces of second delay information are in a one-to-one correspondence with the plurality of pieces of data, and each piece of second delay information indicates a difference between a corresponding transmission delay and a minimum transmission delay. In some other embodiments, the feedback information may include a plurality of pieces of third delay information, the plurality of pieces of third delay information are in a one-to-one correspondence with the plurality of pieces of data, and each of the plurality of pieces of third delay information is a transmission delay of corresponding data determined by the second computer device. In some other embodiments, the feedback information may include a plurality of pieces of fourth delay information, the plurality of pieces of fourth delay information are in a one-to-one correspondence with the plurality of pieces of data, and each of the plurality of pieces of fourth delay information is receiving time of corresponding data. It may be understood that, if the feedback information includes the fourth delay information, the first computer device needs to determine delays of the plurality of pieces of data based on sending time of the plurality of pieces of data.

A correspondence between delay information and data may be represented by using identity information and a delay of the data. The second delay information is used as an example. It is assumed that identity information of data 1, data 2, and data 3 is SEQ1, SEQ2, and SEQ3 respectively. In this case, second delay information corresponding to the data 1 may include SEQ1 and T1, second delay information corresponding to the data 2 may include SEQ2 and T2, and second delay information corresponding to the data 3 may include SEQ3 and T3. T1, T2, and T3 are respectively differences between transmission delays of the data 1, the data 2, and the data 3 received by the second computing device over a current link and a minimum transmission delay of the current link.

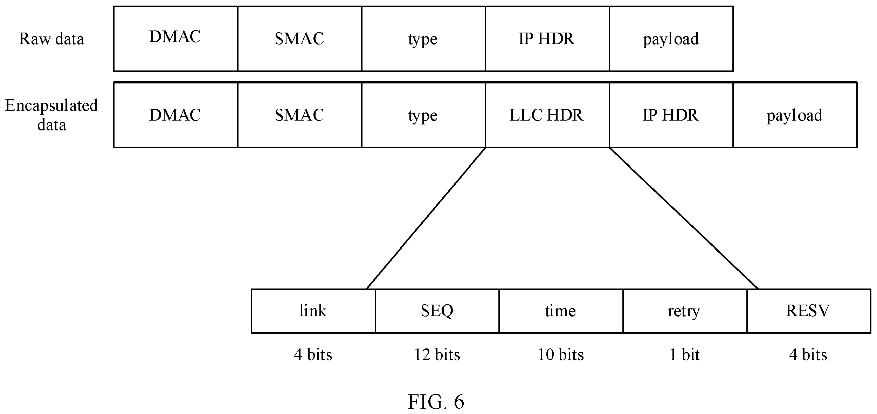

FIG. 6 is a schematic diagram of data sent by a first computer device to a second computer device. As shown in FIG. 6, raw data includes a destination medium access control (destination medium access control, DMAC) address field, a source medium access control (source medium access control, SMAC) address field, a type (type) field, an internet protocol (internet protocol, IP) header (header, HDR) field, and a payload (payload) field. When sending data to the second computer device, the first computer device adds logical link control (logical link control, LLC) information to the data. As shown in FIG. 6, in addition to fields in the raw data, encapsulated data further includes an LLC HDR field. The LLC HDR field is used to carry the LLC information. A link (link) field in the LLC HDR field is used to carry first identity information, a sequence (sequence, SEQ) field is used to carry second identity information, and a time (time) field is used to carry sending time. In some embodiments, the sending time carried in the time field may be a low-order timestamp of the sending time. In this way, a length occupied by the sending time in the LLC information can be reduced. As shown in FIG. 6, a length of the link field in the encapsulated data is 4 bits (bits). For example, if a value of the link field is 0000, the link is a 2.4 G wireless link, or if a value of the link field is 0001, the link is a 5 G wireless link. A length of the encapsulated SEQ field is 12 bits. The first computer device may allocate a sequence number to each piece of data, and the second identity information may be the sequence number of the data. The time field is sending time with a length of 10 bits. In addition to the foregoing fields, the LLC HDR field may further carry a retransmission (retry) flag with a length of 1 bit and a reserved (reserve, RESV) field with a length of remaining 4 bits.

It may be understood that the encapsulated data shown in FIG. 6 is only a data format that can carry the first identity information, the second identity information, and the sending time, but is not a limitation on a format of the data sent by the first computer device. A person skilled in the art may further use data that is in another format or encapsulated in another manner to carry the first identity information, the second identity information, and the sending time. For example, the LLC HDR may not include a reserved bit, and a length of the time field is increased to 14 bits. For another example, if link types supported by the first computer device are less than or equal to 4, only a link field whose length is 2 bits may be used.

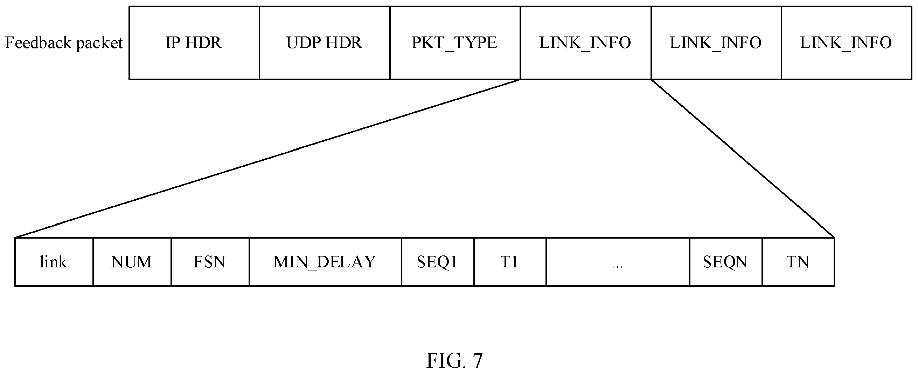

FIG. 7 is a schematic diagram of a feedback packet sent by a second computer device to a first computer device. Feedback frames shown in FIG. 7 include an IP HDR field, a user datagram protocol (user datagram protocol, UDP) HDR field, a packet type (packet type, PKY TYPE) field, and a plurality of link information (link information, link_info) fields. The packet type field indicates that the packet is a data packet used to carry feedback delay information. Each of the plurality of link information fields may carry one piece of feedback information.

As shown in FIG. 7, the link information field includes a link field, a sequence number (number, NUM) field, a first sequence number (first sequence number, FSN) field, and a minimum delay (minimum delay, MIN_DELAY) field. The link field carries identity information of a link, that is, indicates that the link is a 2.4 G wireless link, a 5 G wireless link, a 5 G high-frequency wireless link, a 5 G low-frequency wireless link, or the like. The NUM field indicates a total quantity of pieces of feedback delay information included in the link information field. In some embodiments, the link information field may alternatively not include the NUM field. The FSN field carries a sequence number of a first packet received on the link indicated by the link field. The MIN_DELAY field carries a minimum transmission delay on the link. In addition, the link information field further includes a plurality of SEQ fields and a plurality of time (time, T) fields. SEQi indicates a difference between a sequence number of a received packet and the sequence number of the first packet received on the link (namely, the sequence number carried in the FSN field). Ti indicates a difference between a delay of receiving data corresponding to SEQi and the minimum transmission delay on the link (namely, the delay carried in the MIN_DELAY field).

It may be understood that the feedback packet shown in FIG. 7 indicates a possible data format used to carry feedback information, but is not a limitation on the data format used to carry feedback information. A person skilled in the art may further use data that is in another format or encapsulated in another manner to carry the feedback information. For example, the feedback packet may include or carry only one piece of feedback information. The PKY type field may also indicate an identity of the link. For another example, in some embodiments, each time the second computer device receives one piece of data from the first computer device, the second computer device feeds back delay information corresponding to the data to the first computer device.

It is assumed that the first computer device and the second computer device determine a mapping table by using data formats shown in FIG. 6 and FIG. 7. In this case, each time the first computer device sends one piece of data to the second computer device, a queue length (which may also be referred to as a congestion length) $LEN_j$ of a sending queue for sending the data and a sequence number $SEQ_j$ of the data may be recorded. After receiving the feedback packet sent by the second computer device, the first computer device may find, based on the stored sequence number $SEQ_j$ and the FSN field in the feedback packet, delay information $T_j$ corresponding to the sequence number $SEQ_j$ from the feedback packet, and then determine, based on the delay information $T_j$ and a minimum delay on the link, a transmission delay from the first computer device to the second computer device when the queue length is $LEN_j$. In this way, an entry in a mapping table for recording a relationship between a queue length and a delay is obtained. If data whose sequence number is $SEQ_j$ is sent over the first link, the entry is recorded in the mapping table shown in Table 1. If data whose sequence number is $SEQ_j$ is sent over the second link, the entry is recorded in the mapping table shown in Table 2.

The delay obtained through measurement in the foregoing embodiment is a delay from the first computer device to the second computer device. In some other embodiments, the first computer device may further measure round-trip time (round-trip time, RTT), and use the RTT obtained through measurement as the delay in the mapping table. The RTT may be measured by using a common measurement method. For example, RTT from the first computer device to the second computer device is measured by using a transmission control protocol (transmission control protocol, TCP) timestamp option or a TCP control block in a TCP retransmission queue.

As described above, the historical statistical information may further include the throughput at which the first computer device sends data over the N links. The following still uses the first link and the second link as examples to describe how to obtain the throughput at which the first computer device sends data over the N links.

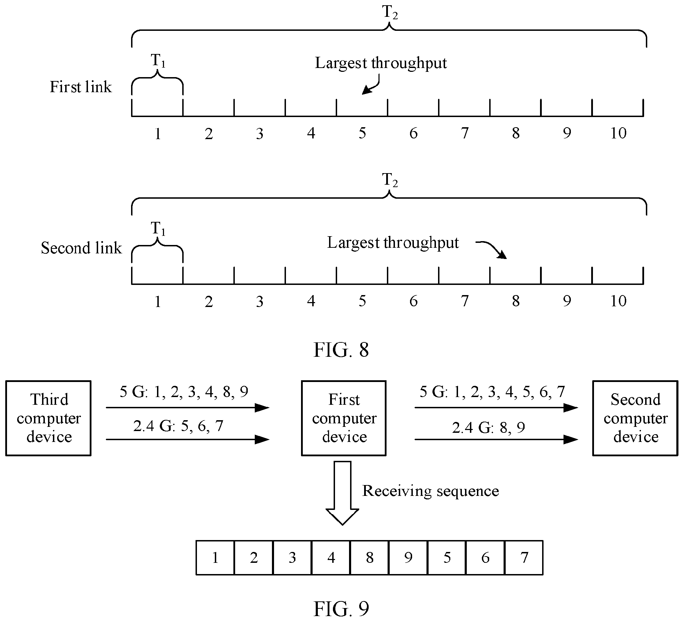

FIG. 8 is a schematic diagram of determining a throughput of sending data over N links.

As shown in FIG. 8, a first computer device measures, by using T1 as a measurement periodicity, a throughput of sending data over the first link in a time period T1. The throughput obtained by the first computer device through measurement in the measurement periodicity may be referred to as a reference throughput. The first computer device may determine reference throughputs in M measurement periodicities. M is a positive integer greater than or equal to 2. M may be a preset value. For example, in FIG. 8, a value of M is 10. After completing measurement in 10 measurement periodicities, the first computer device may determine, based on 10 reference throughputs, a throughput of sending data over a link. For ease of description, the M measurement periodicities may be collectively referred to as a decision-making periodicity. For example, in some embodiments, the first computer device may determine a largest value of M reference throughputs as the throughput of sending data over the link. For example, as shown in FIG. 8, the first computer device may determine that a throughput of sending data over the first link is a throughput of sending data that is obtained through measurement in a $5^{th}$ measurement periodicity, and determine that a throughput of sending data over the second link is a throughput of sending data that is obtained through measurement in an $8^{th}$ measurement periodicity.

In some other embodiments, the first computer device may further determine an average value of K largest reference throughputs over the first link/second link in the decision-making periodicity as a throughput of sending data over the first link/second link. K is a positive integer greater than or equal to 2. K is a preset value. It is clear that K needs to be less than M.

In some other embodiments, the first computer device may further set a throughput threshold, and then determine a reference throughput that is greater than the throughput threshold over the first link/second link in the decision-making periodicity. If there is only one reference throughput that is greater than or equal to the throughput threshold over the first link/second link in the decision-making periodicity, it may be determined that the reference throughput is the throughput of sending data over the first link/second link. If there are a plurality of reference throughputs that are greater than or equal to the throughput threshold over the first link/second link in the decision-making periodicity, it may be determined that an average value of the plurality of reference throughputs is the throughput of sending data over the first link/second link. If there is no reference throughput that is greater than or equal to the throughput threshold over the first link/second link in the decision-making periodicity, it may be determined that the throughput threshold or a reference throughput closest to the throughput threshold is the throughput of sending data over the first link/second link. Optionally, throughput thresholds of different links may be the same or different.

When historical statistical information is a throughput at which the first computer device sends data over N links, the first computer device may determine a first predicted value according to the following formula:

$$\text{sched\_value}_n = \text{mapdu\_num}_n / \text{flow}_n. \quad \text{Formula 1.1}$$

Herein, $\text{sched\_value}_n$ indicates a first predicted value of an $n^{th}$ link, $\text{mapdu\_num}_n$ indicates a sending queue length of the $n^{th}$ link, and $\text{flow}_n$ indicates a throughput of sending data over the $n^{th}$ link, where n=1, ..., or N. When the historical statistical information is the throughput at which the first computer device sends data over N links, a smaller first predicted value obtained based on the historical statistical information indicates better link quality.

As described above, in some embodiments, the historical statistical information may include both a mapping relationship between a sending queue length and link quality and the throughput at which the first computer device sends data over N links. In this case, a first predicted reference value of the $n^{th}$ link may be determined based on the sending queue length of the $n^{th}$ link and a mapping relationship between a sending queue length and link quality of the $n^{th}$ link, and a second predicted reference value of the $n^{th}$ link may be determined based on the sending queue length of the $n^{th}$ link and the throughput at which the first computer device sends data over N links. A method for determining the first predicted reference value is the same as a manner of determining the first predicted value when the historical statistical information includes only the mapping relationship between a sending queue length and link quality. Similarly, a method for determining the second predicted reference value is the same as a manner of determining the first predicted value when the historical statistical information includes only the throughput at which the first computer device sends data over N links. After the first predicted reference value of the $n^{th}$ link and the second predicted reference value of the $n^{th}$ link are determined, the first predicted reference value of the $n^{th}$ link and the second predicted reference value of the $n^{th}$ link may be summed up, to obtain the first predicted value of the $n^{th}$ link. In some embodiments, before the first predicted value and a second predicted value are summed up, the first predicted value and the second predicted value may be normalized first, and a normalized first predicted value and a normalized second predicted value are summed up to obtain the first predicted value. In some other embodiments, when the first predicted value and the second predicted value are summed up, different weight values may be assigned to the first predicted value and the second predicted value.

In some embodiments, after determining first predicted values of the N links, the first computer device may select a link with best link quality as a first target link for sending first data.

In some other embodiments, if the first computer device is a relay node, the first computer device may determine, based on the first predicted values of the N links and second data, the first target link for sending the first data. Both the second data and the first data are sent by a third computer device to the first computer device, and sending time of the second data is earlier than sending time of the first data. If unreceived second data exists, a link other than a link with best link quality in the N links is selected as the first target link for sending the first data; or if unreceived second data does not exist, a link with best link quality in the N links may be selected as a target link for sending the first data.

For ease of description, if unreceived second data exists, the first data may be referred to as out-of-order data. If unreceived second data does not exist, the first data may be referred to as sequential data.

The following describes how to determine a first target link when a first computer device is a relay node with reference to FIG. 9.

FIG. 9 is a schematic diagram of a computer system including a relay node.

In FIG. 9, a third computer device sends data to a first computer device over a 2.4 G wireless link and a 5 G wireless link. In FIG. 9, the data sent by the third computer device to the first computer device may be represented by Arabic numerals. Data 1 represents a $1^{st}$ piece of data sent by the third computer device to the first computer device, data 2 represents a $2^{nd}$ piece of data sent by the third computer device to the first computer device, and so on. It can be learned that, the $1^{st}$, $2^{nd}$, $3^{rd}$, $4^{th}$, $8^{th}$, and $9^{th}$ pieces of data sent by the third computer device to the first computer device are sent over the 5 G wireless link, and the $5^{th}$, $6^{th}$, and $7^{th}$ pieces of data are sent over the 2.4 G wireless link. When receiving the data from the third computer device, the first computer device receives the data 1, the data 2, data 3, and data 4 in sequence. However, after receiving the data 4, the first computer device receives data 8 and data 9. Data 5 to data 7 are received after the data 9 is received. For the data 8 and the data 9, the data 5 to the data 7 are second data, while the data 1 to the data 4 and the data 5 to the data 7 have no corresponding second data. Therefore, the data 8 and the data 9 are out-of-order data. In this case, the first computer device may send the data 8 and the data 9 over a link with poor link quality, and send the data 5, the data 6, and the data 7 over a link with better link quality. It is assumed that link quality of the 5 G wireless link is better than link quality of the 2.4 G wireless link. In this case, the first computer device sends the data 5 to the data 7 over the 5 G wireless link, and sends the data 8 and the data 9 over the 2.4 G wireless link. In this way, the second computer device may receive the data 1 to the data 9 in a sending sequence of the data 1 to the data 9. Therefore, in the foregoing technical solution, a probability of sorting the received data by the second computer device can be reduced.

Optionally, in some embodiments, if determining that unreceived second data exists, the first computer device predetermines a second target link for sending the second data. In this way, when receiving the second data, the first computer device may directly send the second data to the first computer device over the second target link.

When a target link is selected for the first data, a current sending queue length on each link needs to be learned. However, because the first computer device has not received the second data, the first computer device may determine a reference sending queue length based on a reference length, then determine N second predicted values based on the reference sending queue length, and then determine, based on the N second predicted values, the second target link for sending the second data.

For ease of description, data that is sent by the third computer device to the first computer device and whose sending time is earlier than that of the second data may be referred to as third data. FIG. 9 is still used as an example. For the data 5, the third data is the data 9. A sending queue length used when the first computer device sends the third data may be referred to as a first reference sending queue length. The first computer device may determine a second reference sending queue length based on the reference length and the first reference sending queue length. For example, the second reference sending queue length may be a sum of the first reference sending queue length and the reference length. A determining manner in which the first computer device determines the N second predicted values based on historical statistical information is the same as a determining manner in which the first computer device determines the N first predicted values based on the historical statistical information. For brevity, details are not described herein again.

In some embodiments, the reference length may be equal to a length of a maximum transmission unit (maximum transmission unit, MTU).

In some other embodiments, the reference length may be equal to a length of one piece of data recently received by the first computer device or an average value of lengths of a plurality of pieces of data recently received.

The first computer device that serves as the relay node may be the router 202 in (a) in FIG. 2 or the router 302 in FIG. 3.

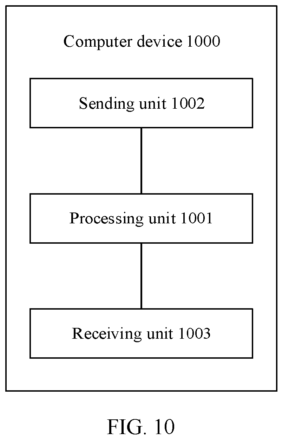

FIG. 10 is a schematic block diagram of a structure of a computer device according to an embodiment of this application. The computer device shown in FIG. 10 may be the first computer device in the foregoing method. As shown in FIG. 10, the computer device 1000 includes a processing unit 1001 and a sending unit 1002.

The processing unit 1001 is configured to determine a sending queue length of each of N links, where N is a positive integer greater than or equal to 2.

The processing unit 1001 is further configured to determine N first predicted values based on historical statistical information and the sending queue length of each of the N links, where the historical statistical information is determined by the computer device based on data sent to a second computer device over the N links, and the N first predicted values are respectively used to predict link quality of the N links.

The processing unit 1001 is further configured to determine a first target link from the N links based on the N first predicted values.

The sending unit 1002 is configured to send first data to the second computer device over the first target link, where the first data is a part of data in a target data stream.

The processing unit 1001 may be implemented by a processor, and the sending unit 1002 may be implemented by a transmitter. In some embodiments, the computer device 1000 may further include a receiving unit 1003 configured to receive the first data. The receiving unit 1003 may be implemented by a receiver. For specific functions and beneficial effects of the processing unit 1001, the sending unit 1002, and the receiving unit 1003, refer to the foregoing embodiments. Details are not described herein again.

It should be understood that the computer device 1000 may alternatively be a chip. For example, the computer device may be a system on chip (system on chip, SoC), or may be a central processing unit (central processing unit, CPU) or another integrated chip.

If the computer device 1000 is a chip, the sending unit 1002 and the receiving unit 1003 may be an input/output circuit or a communication interface, and the processing unit 1001 may be a processor integrated on the chip or an integrated circuit.

An embodiment of this application further provides a computer device. The computer device includes a processor. The processor is configured to: be coupled to a memory, and read and execute instructions and/or program code in the memory, to perform the method in any one of the foregoing embodiments.

An embodiment of this application further provides a chip system. The chip system includes a logic circuit. The logic circuit is configured to: be coupled to an input/output interface, and transmit data through the input/output interface, to perform the method in any one of the foregoing embodiments.

During implementation, the steps in the foregoing methods may be completed by using a hardware integrated logic circuit in the processor, or by using instructions or program code in a form of software. The steps of the methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. During implementation, the steps in the foregoing method embodiments may be completed by using a hardware integrated logic circuit in the processor, or by using instructions or program code in a form of software. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the methods provided in embodiments of this application, this application further provides a computer program product. The computer program product includes computer program code. When the computer program code is run on a computer, the computer is enabled to perform the method in any one of the foregoing embodiments.

According to the methods provided in embodiments of this application, this application further provides a computer-readable medium. The computer-readable medium stores program code. When the program code is run on a computer, the computer is enabled to perform the method in any one of the foregoing embodiments.

According to the methods provided in embodiments of this application, this application further provides a system, including the foregoing first computer device and the second computer device. In some embodiments, the system may further include a third computer device. The third computer device may be a computer device that supports a plurality of links, or may be a computer device that does not support a plurality of links.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions or program code for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A data sending method, comprising:

   determining, by a first computer device, a sending queue length of each of N links, wherein N is a positive integer greater than or equal to 2;
   determining, by the first computer device, N first predicted values based on historical statistical information and the sending queue length of each of the N links, wherein the historical statistical information is determined by the first computer device based on data sent to a second computer device over the N links, and the N first predicted values are respectively used to predict link quality of the N links;
   determining, by the first computer device, a first target link from the N links based on the N first predicted values; and
   sending, by the first computer device, first data to the second computer device over the first target link, wherein the first data is a part of data in a target data stream.

2. The method according to claim 1, wherein the historical statistical information comprises at least one of the following information: a mapping relationship between a sending queue length and link quality, or a throughput at which the first computer device sends data over the N links.

3. The method according to claim 2, wherein the determining, by the first computer device, a first target link from the N links based on the N first predicted values comprises:
   determining, by the first computer device based on the N first predicted values, a link with best link quality in the N links as the first target link.

4. The method according to claim 2, wherein when the first computer device is a relay node, before the determining, by a first computer device, a sending queue length of each of N links, the method further comprises:

   receiving, by the first computer device, the first data from a third computer device; and
   the determining, by the first computer device, a first target link from the N links based on the N first predicted values comprises:

   determining, by the first computer device, whether unreceived second data exists, wherein the second data is data that is sent by the third computer device to the first computer device and whose sending time is earlier than that of the first data; and when the unreceived second data does not exist, determining, by the first computer device based on the N first predicted values, a link with best link quality in the N links as the first target link; or when the unreceived second data exists, determining, by the first computer device based on the N first predicted values, a link other than a link with best link quality in the N links as the first target link.

5. The method according to claim 4, wherein when the unreceived second data exists, the method further comprises:

   determining, by the first computer device, a second reference sending queue length of an $n^{th}$ link in the N links based on a reference length and a first reference sending queue length of the $n^{th}$ link, wherein the first reference sending queue length of the $n^{th}$ link is a sending queue length of the $n^{th}$ link that is used when the first computer device sends third data, the third data is data that is sent by the third computer device to the first computer device and whose sending time is earlier than that of the second data, and n=1, ..., or N;

determining N second predicted values based on the historical statistical information and a second reference sending queue length of each of the N links, wherein the N second predicted values are respectively used to predict reference link quality of the N links;

determining a second target link based on the N second predicted values, wherein the second target link is a link with best reference link quality in the N links; and

when the second data from the third computer device is received, forwarding the second data to the second computer device over the second target link.

6. The method according to any one of claims 2 to 5, wherein when the historical statistical information comprises the throughput at which the first computer device sends data over the N links, before the determining, by the first computer device, N first predicted values based on historical statistical information and the sending queue length of each of the N links, the method further comprises:

determining, by the first computer device, M reference throughputs of the $n^{th}$ link in the N links, wherein an $m^{th}$ reference throughput in the M reference throughputs is determined by the first computer device based on data successfully sent to the second computer device over the $n^{th}$ link in an $m^{th}$ periodicity in M periodicities, M is a positive integer greater than or equal to 2, m=1, ..., or M, and n=1, ..., or N; and

determining, by the first computer device based on one or more largest reference throughputs in the M reference throughputs, a throughput of sending data over the $n^{th}$ link.

7. The method according to any one of claims 2 to 6, wherein when the historical statistical information comprises the mapping relationship between a sending queue length and link quality, before the determining, by the first computer device, N first predicted values based on historical statistical information and the sending queue length of each of the N links, the method further comprises:

sending, by the first computer device, a plurality of pieces of data to the second computer device over the $n^{th}$ link in the N links, wherein n=1, ..., or N;

receiving, by the first computer device, feedback information from the second computer device, wherein the feedback information comprises link quality of the plurality of pieces of data; and

determining, by the first computer device, a mapping relationship between a sending queue length and link quality of the $n^{th}$ link based on a plurality of sending queue lengths and the link quality of the plurality of pieces of data, wherein the plurality of sending queue lengths are respectively sending queue lengths used when the first computer device sends the plurality of pieces of data to the second computer device.

8. The method according to claim 7, wherein each of the plurality of pieces of data comprises first identity information, second identity information, and sending time information, the first identity information indicates an identity of the $n^{th}$ link, the second identity information indicates an identity of each piece of data, and the sending time information indicates sending time of each piece of data; and

the feedback information comprises first delay information, a plurality of pieces of second delay information, and the first identity information, the first delay information indicates a minimum transmission delay of the $n^{th}$ link, the plurality of pieces of second delay information are in a one-to-one correspondence with the plurality of pieces of data, and each of the plurality of pieces of second delay information indicates a difference between a transmission delay of corresponding data and the minimum transmission delay.

9. The method according to any one of claims 1 to 8, wherein the N links comprise at least two of the following links: a 2.4 GHz frequency band wireless link, a 5 GHz frequency band wireless link, a 5 GHz low-frequency wireless link, a 5 GHz high-frequency wireless link, a wired link, an optical fiber, and a power line communication link.

10. A computer device, comprising:

a processing unit, configured to determine a sending queue length of each of N links, wherein N is a positive integer greater than or equal to 2, wherein

the processing unit is further configured to determine N first predicted values based on historical statistical information and the sending queue length of each of the N links, wherein the historical statistical information is determined by the computer device based on data sent to a second computer device over the N links, and the N first predicted values are respectively used to predict link quality of the N links; and

the processing unit is further configured to determine a first target link from the N links based on the N first predicted values; and

a sending unit, configured to send first data to the second computer device over the first target link, wherein the first data is a part of data in a target data stream.

**11.** The computer device according to claim 10, wherein the historical statistical information comprises at least one of the following information: a mapping relationship between a sending queue length and link quality, or a throughput at which the computer device sends data over the N links.

**12.** The computer device according to claim 11, wherein the processing unit is specifically configured to determine, based on the N first predicted values, a link with best link quality in the N links as the first target link.

**13.** The computer device according to claim 11, wherein the computer device further comprises a receiving unit, configured to receive the first data from a third computer device; and

the processing unit is specifically configured to: when the computer device is a relay node, before determining the sending queue length of each of the N links, determine whether unreceived second data exists, wherein the second data is data that is sent by the third computer device to the computer device and whose sending time is earlier than that of the first data; and when the unreceived second data does not exist, determine, based on the N first predicted values, a link with best link quality in the N links as the first target link; or when the unreceived second data exists, determine, based on the N first predicted values, a link other than a link with best link quality in the N links as the first target link.

**14.** The computer device according to claim 13, wherein the processing unit is further configured to: when the unreceived second data exists, determine a second reference sending queue length of an $n^{th}$ link in the N links based on a reference length and a first reference sending queue length of the $n^{th}$ link, wherein the first reference sending queue length of the $n^{th}$ link is a sending queue length of the $n^{th}$ link that is used when the computer device sends third data, the third data is data that is sent by the third computer device to the computer device and whose sending time is earlier than that of the second data, and n=1, ..., or N;

determine N second predicted values based on the historical statistical information and a second reference sending queue length of each of the N links, wherein the N second predicted values are respectively used to predict reference link quality of the N links; determine a second target link based on the N second predicted values, wherein the second target link is a link with best reference link quality in the N links; and

when the second data from the third computer device is received, forward the second data to the second computer device over the second target link.

**15.** The computer device according to any one of claims 11 to 14, wherein when the historical statistical information comprises the throughput at which the computer device sends data over the N links, the processing unit is further configured to: before determining the N first predicted values based on the historical statistical information and the sending queue length of each of the N links, determine M reference throughputs of the $n'''$ link in the N links, wherein an $m^{th}$ reference throughput in the M reference throughputs is determined by the computer device based on data successfully sent to the second computer device over the $n^{th}$ link in an $m^{th}$ periodicity in M periodicities, M is a positive integer greater than or equal to 2, m=1, ..., or M, and n=1, ..., or N; and determine, based on one or more largest reference throughputs in the M reference throughputs, a throughput of sending data over the $n^{th}$ link.

**16.** The computer device according to any one of claims 11 to 15, wherein when the historical statistical information comprises the mapping relationship between a sending queue length and link quality, the sending unit is further configured to: before the determining unit determines the N first predicted values based on the historical statistical information and the sending queue length of each of the N links, send a plurality of pieces of data to the second computer device over the $n^{th}$ link in the N links, wherein n=1, ..., or N;

the receiving unit is further configured to receive feedback information from the second computer device, wherein the feedback information comprises link quality of the plurality of pieces of data; and the processing unit is further configured to determine a mapping relationship between a sending queue length and link quality of the $n^{th}$ link based on a plurality of sending queue lengths and the link quality of the plurality of pieces of data, wherein the plurality of sending queue lengths are respectively sending queue lengths used when the computer device sends the plurality of pieces of data to the second computer device.

**17.** The computer device according to claim 16, wherein each of the plurality of pieces of data comprises first identity information, second identity information, and sending time information, the first identity information indicates an identity of the $n^{th}$ link, the second identity information indicates an identity of each piece of data, and the sending time information indicates sending time of each piece of data; and

the feedback information comprises first delay information, a plurality of pieces of second delay information, and the first identity information, the first delay information indicates a minimum transmission delay of the $n^{th}$ link, the plurality of pieces of second delay information are in a one-to-one correspondence with the plurality of pieces of data, and each of the plurality of pieces of second delay information indicates a difference between a transmission delay of corresponding data and the minimum transmission delay.

18. The computer device according to any one of claims 10 to 17, wherein the N links comprise at least two of the following links: a 2.4 GHz frequency band wireless link, a 5 GHz frequency band wireless link, a 5 GHz low-frequency wireless link, a 5 GHz high-frequency wireless link, a wired link, an optical fiber, and a power line communication link.

19. A computer device, comprising a processor, wherein the processor is configured to: be coupled to a memory, and read and execute instructions and/or program code in the memory, to perform the method according to any one of claims 1 to 9.

20. A chip system, comprising a logic circuit, wherein the logic circuit is configured to: be coupled to an input/output interface, and transmit data through the input/output interface, to perform the method according to any one of claims 1 to 9.

21. A computer-readable medium, wherein the computer-readable medium stores program code, and when the computer program code is run on a computer, the computer is enabled to perform the method according to any one of claims 1 to 9.

FIG. 1

(a)

(b)

FIG. 2

FIG. 3

FIG. 4

A first computer device determines a sending queue length of each of N links | 501

The first computer device determines N first predicted values based on historical statistical information and the sending queue length of each of the N links | 502

The first computer device determines a first target link from the N links based on the N first predicted values | 503

The first computer device sends first data to a second computer device over the first target link | 504

FIG. 5

EP 4 468 672 A1

Raw data

| DMAC | SMAC | type | IP HDR | payload |
|------|------|------|--------|---------|

Encapsulated data

| DMAC | SMAC | type | LLC HDR | IP HDR | payload |
|------|------|------|---------|--------|---------|

| link | SEQ | time | retry | RESV |
|------|-----|------|-------|------|
| 4 bits | 12 bits | 10 bits | 1 bit | 4 bits |

FIG. 6

Feedback packet

| IP HDR | UDP HDR | PKT_TYPE | LINK_INFO | LINK_INFO | LINK_INFO |
|---|---|---|---|---|---|

| link | NUM | FSN | MIN_DELAY | SEQ1 | T1 | ... | SEQN | TN |
|---|---|---|---|---|---|---|---|---|

FIG. 7

$$T_2$$

First link

$$T_1$$

Largest throughput

| 1 | 2 | 3 | 4 | 5 | 6 | 7 | 8 | 9 | 10 |

$$T_2$$

Second link

$$T_1$$

Largest throughput

| 1 | 2 | 3 | 4 | 5 | 6 | 7 | 8 | 9 | 10 |

FIG. 8

| Third computer device | 5 G: 1, 2, 3, 4, 8, 9 → | First computer device | 5 G: 1, 2, 3, 4, 5, 6, 7 → | Second computer device |
| | 2.4 G: 5, 6, 7 → | | 2.4 G: 8, 9 → | |

Receiving sequence

| 1 | 2 | 3 | 4 | 8 | 9 | 5 | 6 | 7 |

FIG. 9

Computer device 1000

Sending unit 1002

Processing unit 1001

Receiving unit 1003

FIG. 10

## INTERNATIONAL SEARCH REPORT

| | International application No. |
|---|---|
| | **PCT/CN2022/080324** |

**A. CLASSIFICATION OF SUBJECT MATTER**

H04L 45/24(2022.01)i; H04L 47/56(2022.01)i

According to International Patent Classification (IPC) or to both national classification and IPC

**B. FIELDS SEARCHED**

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; VEN; WPABS; ENTXTC; ENTXT; CNKI; 3GPP: 多链路, 质量, 时延, 吞吐率, 丢包率, 队列, 历史, 顺序, multi-path, quality, delay, throughput, packet loss, queue?, history, order

**C. DOCUMENTS CONSIDERED TO BE RELEVANT**

| Category* | Citation of document, with indication, where appropriate, of the relevant passages | Relevant to claim No. |
|---|---|---|
| X | CN 112054966 A (CAPITAL NORMAL UNIVERSITY) 08 December 2020 (2020-12-08) description, paragraphs 82-155 | 1-3, 6-12, 15-21 |
| X | US 6178448 B1 (IBM) 23 January 2001 (2001-01-23) description, columns 6-7 | 1-3, 6-12, 15-21 |
| A | CN 103841041 A (ZTE CORP.) 04 June 2014 (2014-06-04) entire document | 1-21 |
| A | CN 111277502 A (BEIJING HONGYUN RONGTONG TECHNOLOGY CO., LTD.) 12 June 2020 (2020-06-12) entire document | 1-21 |
| A | US 2009196294 A1 (QUALCOMM INC.) 06 August 2009 (2009-08-06) entire document | 1-21 |
| A | US 2017034843 A1 (QUALCOMM INC.) 02 February 2017 (2017-02-02) entire document | 1-21 |
| A | WO 2021120783 A1 (HUAWEI TECHNOGOLY CO., LTD.) 24 June 2021 (2021-06-24) entire document | 1-21 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 August 2022** | **26 October 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/080324**

| Patent document cited in search report | | | Publication date (day/month/year) | Patent family member(s) | | | Publication date (day/month/year) |
|---|---|---|---|---|---|---|---|
| CN | 112054966 | A | 08 December 2020 | None | | | |
| US | 6178448 | B1 | 23 January 2001 | US | 6862618 | B1 | 01 March 2005 |
| CN | 103841041 | A | 04 June 2014 | WO | 2013182122 | A1 | 12 December 2013 |
| | | | | CN | 103841041 | B | 28 December 2018 |
| CN | 111277502 | A | 12 June 2020 | CN | 111277502 | B | 17 May 2022 |
| US | 2009196294 | A1 | 06 August 2009 | KR | 20100112187 | A | 18 October 2010 |
| | | | | JP | 2011514722 | A | 06 May 2011 |
| | | | | BR | PI0906680 | A2 | 16 January 2018 |
| | | | | EP | 2317683 | A2 | 04 May 2011 |
| | | | | CN | 101933298 | A | 29 December 2010 |
| | | | | RU | 2010136729 | A | 10 March 2012 |
| | | | | WO | 2009099921 | A2 | 13 August 2009 |
| | | | | CA | 2710875 | A1 | 13 August 2009 |
| | | | | TW | 200943798 | A | 16 October 2009 |
| | | | | EP | 2250770 | A2 | 17 November 2010 |
| | | | | WO | 2009099921 | A3 | 01 October 2009 |
| | | | | SG | 162939 | A1 | 30 August 2010 |
| | | | | IN | 201004060 | P4 | 12 November 2010 |
| | | | | EP | 2317683 | A3 | 03 August 2011 |
| | | | | KR | 101154679 | B1 | 13 June 2012 |
| | | | | EP | 2250770 | B1 | 27 June 2012 |
| | | | | RU | 2475972 | C2 | 20 February 2013 |
| | | | | TW | I389499 | B | 11 March 2013 |
| | | | | US | 8483223 | B2 | 09 July 2013 |
| | | | | CN | 101933298 | B | 27 November 2013 |
| | | | | JP | 5437274 | B2 | 12 March 2014 |
| | | | | EP | 2317683 | B1 | 24 August 2016 |
| | | | | IN | 329036 | B | 10 January 2020 |
| US | 2017034843 | A1 | 02 February 2017 | WO | 2017019662 | A1 | 02 February 2017 |
| WO | 2021120783 | A1 | 24 June 2021 | WO | 2013182122 | A1 | 12 December 2013 |
| | | | | CN | 113014508 | A | 22 June 2021 |

Form PCT/ISA/210 (patent family annex) (January 2015)